**Europäisches Patentamt**

**European Patent Office**

**Office européen des brevets**

(19)

(11) Veröffentlichungsnummer: **0 037 564**
**B1**

(12)

# EUROPÄISCHE PATENTSCHRIFT

(45) Veröffentlichungstag der Patentschrift:
**27.08.86**

(21) Anmeldenummer: **81102505.5**

(22) Anmeldetag: **02.04.81**

(51) Int. Cl.⁴: **B 60 T 13/58, B 60 L 7/24**

---

(54) **Automatische Fahr-Bremssteuerung.**

---

(30) Priorität: **03.04.80 DE 3013222**

(43) Veröffentlichungstag der Anmeldung:
**14.10.81 Patentblatt 81/41**

(45) Bekanntmachung des Hinweises auf die Patenterteilung:
**27.08.86 Patentblatt 86/35**

(84) Benannte Vertragsstaaten:
**AT CH DE FR GB LI SE**

(56) Entgegenhaltungen:
**EP - A - 0 037 565**

**EISENBAHNTECHNISCHE RUNDSCHAU, Band 29, November 1980, Seiten 775-779, Darmstadt, DE; K.-J. GOTTHARDT: "Einsatz von Mikrocomputern auf Triebfahrzeugen"**

(73) Patentinhaber: **Siemens Aktiengesellschaft Berlin und München, Wittelsbacherplatz 2, D-8000 München 2 (DE)**
Patentinhaber: **KNORR-BREMSE AG, Moosacher Strasse 80 Postfach 401060, D-8000 München 40 (DE)**

(72) Erfinder: **Gotthardt, Klaus-Jürgen, Auracher Strasse 10, D-8521 Untermembach (DE)**
Erfinder: **Lichtenstein, Lothar Dipl.-Ing., Ebnerstrasse 13, D-8520 Erlangen (DE)**
Erfinder: **Gerum, Eduard, Dr., Strassberger Strasse 32, D-8000 München 40 (DE)**
Erfinder: **Kessel, Gerd, Dr., Parksiedlung 8, D-8031 Gieselbullach (DE)**

(74) Vertreter: **Mehl, Ernst, Dipl.-Ing. et al, Postfach 22 01 76, D-8000 München 22 (DE)**

---

### Beschreibung

Die Erfindung bezieht sich auf eine automatische Fahr-Bremssteuerung für spurgebundene Fahrzeuge der im Oberbegriff des Anspruchs 1 genannten Art.

Bei bekannten automatischen Fahr-Bremssteuerungen für lokomotivbespannte Züge, insbesondere für Züge mit rein pneumatischer Zugbremse, verfügt die Lokomotive üblicherweise über eine generatorische Bremse und eine pneumatische Ergänzungsbremse. Die Zugbremse wird über eine konventionelle pneumatische Zugsteuerleitung angesteuert. Die automatische Fahr-Bremssteuerung regelt die Beschleunigung und Verzögerung des Zuges durch Regelung des Antriebes und durch Betätigung von Lok- und Zugbremse. Dabei wird zur Verringerung des Verschleisses gefordert, dass die generatorische Bremse vorrangig eingesetzt wird.

Bekannte Lösungen gehen von vollständiger Priorität der elektrischen Bremse der Lokomotive aus. Die pneumatische Zugbremse wird erst dann hinzugenommen, wenn die Bremskraft der elektrischen Bremse vollständig oder doch nahezu vollständig ausgeschöpft ist (siehe Zeitschrift «Elektrische Bahnen» 1977, Heft 11, Seiten 275 bis 278 und «Elektrotechnische Rundschau» (27), 1/2, 1978, Seiten 55 bis 58). Da die elektrische Bremskraft nur innerhalb vorgegebener Änderungsgeschwindigkeiten ansteigen bzw. abfallen darf, um den Ruck zu begrenzen, wird der schnelle Einsatz der pneumatischen Zugbremse behindert. Die pneumatische Zugbremse darf erst dann in richtiger Weise mitwirken, wenn die Zeit zum vollen Anstieg der elektrischen Bremse abgewartet wurde. In gleicher Weise kann beim Bremskraftabfall die elektrische Bremskraft erst dann reduziert werden, wenn die Bremskraftanforderung den Maximalwert der elektrischen Bremskraft unterschreitet.

Bei einer anderen automatischen Fahr-Bremssteuerung für spurgebundene Fahrzeuge sind getrennte Regeleinrichtungen für das Fahren und pneumatische Bremsen vorgesehen, um das unterschiedliche Zeitverhalten berücksichtigen zu können. Dabei sind die beiden Regeleinrichtungen über eine Steuerlogik miteinander verknüpft (siehe Zeitschrift «Elektrische Bahnen» 1972, Heft 7, Seite 155). Die Steuerlogik wirkt in der Weise, dass bei Bremsbeginn die pneumatische Bremse erst dann angesteuert werden kann, wenn die elektrische Bremse voll ausgesteuert wurde und darüber hinaus behindert die notwendige Ruckbegrenzung für die elektrische Bremse den schnellen Einsatz der pneumatischen Bremse. Beim Lösen der Bremse kann die elektrische Bremskraft erst dann reduziert werden, wenn die Bremskraftanforderung den Minimalwert für die pneumatische Bremse unterschreitet.

Aufgabe der Erfindung ist es, die automatische Fahr-Bremssteuerung so auszubilden, dass die Verzögerungsregelung vollständig parallel auf die elektrische Bremse und pneumatische Zugbremse wirkt.

Diese Aufgabe wird bei einer automatischen Fahr-Bremssteuerung durch die im kennzeichnenden Teil des Anspruchs 1 angegebenen Massnahmen gelöst.

Durch die Erfindung wird eine optimale Anpassung der Regelparameter an die sehr unterschiedlichen Regelstrecken der Bremssysteme ermöglicht. Das bedeutet, dass eine Änderung der Bremsanforderung sich unmittelbar auf die elektrische und pneumatische Zugbremse auswirkt. Die Steuerlogik sorgt dafür, dass nach Stabilisierung der Bremsanforderung eine Bremskraftaufteilung erreicht wird, so dass der Verschleiss minimiert wird und gleichzeitig die Regelfähigkeit möglichst auch der elektrischen Bremse erhalten bleibt.

Nach einer im Anspruch 2 angegebenen Weiterbildung der Erfindung wird die Steuerlogik in vorteilhafter Weise derart beeinflusst, dass der Regelkreis der elektrischen Bremse Priorität erhält, die Regelung dabei aber voll wirksam bleibt.

Die Aufschaltung des Konstantwertes kann nach in den Ansprüchen 3 bis 5 angegebenen Ausgestaltungen der Erfindung abhängig gemacht werden von weiteren Kriterien. Vorzugsweise erfolgt die Aufschaltung nur, wenn die elektrische Bremskraft einen vorgegebenen Wert unterschreitet, der etwa im Bereich von 70 bis 90% des Maximalwertes der E-Bremskraft liegt. Damit wird erreicht, dass die elektrische Bremse vorrangig nur bis zu diesem Wert angesteuert wird, so dass ein Regelspielraum bis zum Maximalwert verbleibt, wenn in diesem Ausgangszustand eine weitere Bremsanforderung hinzukommt.

Ausführungsbeispiele der Erfindung sind in der Zeichnung schematisch dargestellt.

Fig. 1 zeigt ein Schaltbild einer automatischen Fahr-Bremssteuerung eines Triebfahrzeuges mit Wagen,

Fig. 2 eine nähere Darstellung der in Fig. 1 gezeigten Steuerlogik und

Fig. 3 eine in Fig. 1 als Block dargestellte Konstantwert-Zuschaltung.

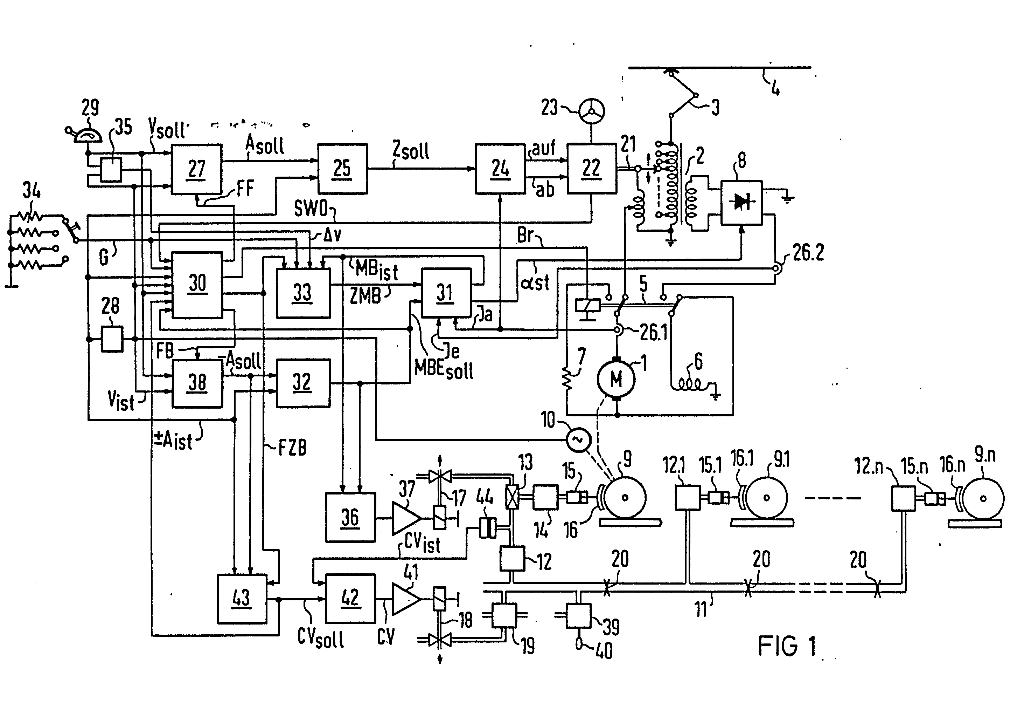

In Fig. 1 ist der Anker eines Fahrmotors 1 über einen Fahr-Brems-Schalter 5, ein Schaltwerk 21, einen mit Wicklungsanzapfungen versehenen Transformator 2 und einen am Triebfahrzeug angebrachten Stromabnehmer 3 mit dem Fahrdraht 4 verbunden. Im Fahrbetrieb ist die Erregerwicklung 6 in Reihe mit dem Anker des Fahrmotors 1 geschaltet. Im Bremsbetrieb wird der Fahr-Brems-Schalter 5 umgeschaltet, so dass der Ankerkreis des Fahrmotors 1 über den Bremswiderstand 7 geschlossen wird und der Bremserregerstromrichter 8, der vom Transformator 2 gespeist wird, an die E-regerwicklung 6 geschaltet wird. Der Fahrmotor 1 wirkt auf Antriebsräder 9, an denen eine Tachomaschine 10 angebracht ist.

Zum pneumatischen Bremsen ist eine Hauptluftleitung 11 durch den Zug verlegt, an der im Triebfahrzeug über ein Steuerventil 12, ein Doppelrückschlagventil 13 und einen Druckübersetzer 14 ein Bremszylinder 15 angeschlossen ist, der auf die Bremsklötze 16 wirkt. Speziell bei Triebfahrzeugen erfolgt über ein Regelmagnetventil 17 und das Doppelrückschlagventil 13 eine direkte Ansteuerung des Druckübersetzers 14 und zwar als Druckluftergänzungsbremse.

Zur Ansteuerung der Zugbremse ist ein Regelmagnetventil 18 vorgesehen, welches über ein Relaisventil 19 den Druck der Hauptluftleitung 11 beeinflusst.

Die Hauptluftleitungen 11 der an das Triebfahrzeug angehängten Wagen sind miteinander verbunden. In den Wagen eins bis n sind an die Hauptluftleitung 11 Steuerventile 12.1 bis 12.n angeschlossen. Diese wirken auf Bremszylinder 15.1 bis 15.n, die ihre Kraft auf die Bremsklötze 16.1 bis 16.n übertragen und die Räder 9.1 bis 9.n der einzelnen Wagen bremsen.

Zum wahlweisen Verbinden des Fahrmotors mit einer Anzapfung des Transformators 2 dient ein Schaltwerk 21, das über eine Schaltwerksteuerung 22 von einem Fahrschalter 23 betätigt werden kann.

Bei der automatischen Fahr-Bremssteuerung wird das Schaltwerk 21 über die Schaltwerksteuerung 22 durch einen Zugkraftregler 24 über die Leitungen «Schaltwerk auf» und «Schaltwerk ab» angesteuert. Den Sollwert $Z_{soll}$ erhält der Zugkraftregler 24 von einem Beschleunigungsregler 25 für den Fahrbetrieb und den Istwert Ja von einem Stromwandler 26.1. Der Beschleunigungsregler 25 für den Fahrbetrieb erhält seinerseits einen Beschleunigungs-Sollwert $A_{soll}$ von einem Geschwindigkeitsregler 27 und einen Beschleunigungs-Istwert $A_{ist}$ von einem Differenzierglied 28, welches die Istgeschwindigkeit $V_{ist}$ der Tachomaschine 10 differenziert. Der Geschwindigkeitsregler 27 für den Fahrbetrieb erhält seinen Sollwert $V_{soll}$ von einem Sollgeschwindigkeitsgeber 29. Einem Istwerteingang wird die Istgeschwindigkeit $V_{ist}$ der Tachomaschine 10 zugeführt. Der Geschwindigkeitsregler 27 wird über einen Freigabeeingang «Fahren» (Signal FF) von einer Steuerlogik 30 beeinflusst.

Beim elektrischen Bremsen mit dem Triebfahrzeug wird der Bremserregerstromrichter 8 von einem Bremsmomentenregler 31 über die Steuerleitung αst angesteuert. Der Sollwert $MBE_{soll}$ für den Bremsmomentenregler 31 wird in einem Beschleunigungsregler 32 für die elektrische Bremse gewonnen. Zusätzlich erhält der Bremsmomentenregler 31 einen Zusatzsollwert ZMB von einer Konstantwertzuschalteinrichtung 33. Die Istwerte für den Bremsmomentenregler 31 und zwar Ja für den Ankerstrom und Je für den Erregerstrom werden in den Stromwandlern 26.1 und 26.2 gewonnen. Der aus den Werten Ja und Je im Bremsmomentenregler 31 gebildete Bremsmomenten-Istwert $MB_{ist}$ wird der Konstantwertzuschaltungseinrichtung 33 zugeführt. Ausserdem erhält diese Einrichtung 33 ein Signal von einem Einsteller 34, der die vom Lokführer eingestellte Zugmasse vorgibt und ein Signal Δv, welches in einem Differenzbildner 35 aus der Sollgeschwindigkeit $V_{soll}$ und der Istgeschwindigkeit $V_{ist}$ gebildet wird. Das Signal des Einstellers 34 wird auch der Steuerlogik 30 zugeführt.

Wenn die elektrische Bremse des Triebfahrzeuges keine ausreichende Bremskraft — bedingt durch die Kennlinie — mehr aufbringen kann, wird die Ergänzungsbremse der Lokomotive angesteuert. Dazu erhält der Bremsregler 36 für die Ergänzungsbremse den Bremsmomenten-Sollwert $MBE_{soll}$ vom Beschleunigungsregler 32 und den Istwert der elektrischen Bremse $MB_{ist}$ aus dem Bremsmomentenregler 31. Das Ausgangssignal des Bremsreglers 36 für Ergänzungsbremse wird über einen Verstärker 37 dem Regelmagnetventil 17 zugeführt, welches die Ergänzungsbremse des Triebfahrzeuges ansteuert. Der Beschleunigungsregler 32 erhält als Eingangsgrössen den Verzögerungs-Sollwert-$A_{soll}$ von einem Geschwindigkeitsregler 38 für den Bremsbetrieb und den Beschleunigungs- bzw. Verzögerungs-Istwert $\pm A_{ist}$ aus dem Differenzierglied 28. Der Geschwindigkeitsregler 38 für den Bremsbetrieb erhält einerseits als Sollwert den Geschwindigkeits-Sollwert $V_{soll}$ vom Sollgeschwindigkeitsgeber 29 und die Istgeschwindigkeit $V_{ist}$ von der Tachomaschine 10. Ein weiterer Eingang des Geschwindigkeitsreglers 38 für den Bremsbetrieb kommt von der Steuerlogik 30 und gibt den Bremsbetrieb frei (Signal FB).

Die pneumatische Bremse des Zuges wird – wie oben beschrieben – durch die Hauptluftleitung 11 beeinflusst. Die Ansteuerung der Hauptluftleitung 11 erfolgt bei Handbetrieb über das Führerbremsventil 39, das mit einem Handhebel 40 versehen ist oder im automatischen Betrieb über das Relaisventil 19 und das Regelmagnetventil 18. Dieses Regelmagnetventil 18 wird über einen Verstärker 14 durch die Leitung CV aus dem Bremskraftregler 42 für den pneumatischen Bremsebetrieb angesteuert. Den Sollwert $CV_{soll}$ erhält der Bremskraftregler 42 für die Druckluftbremse von einem Beschleunigungsregler 43 der pneumatischen Zugbremse, der ausserdem der Steuerlogik 30 zugeführt wird. Der Istwert $CV_{ist}$ wird in einem Druck-Spannungsumsetzer 44 gewonnen. Der Beschleunigungsregler 43 für die Zugbremse erhält seine Eingangswerte wie der Beschleunigungsregler 32 für die elektrische Bremse von dem Differenzierglied 28 und dem Geschwindigkeitsregler 38 für den Bremsbetrieb. Weiterhin erhält der Beschleunigungsregler 43 auch ein Freigabesignal FZB von der Steuerlogik 30.

Die Steuerlogik 30 gewinnt aus den ihr zugeführten Signalen u.a. auch ein Signal Br für den Fahr-Brems-Schalter 5, welcher die elektrischen Einrichtungen des Triebfahrzeuges vom Fahrbetrieb auf Bremsbetrieb umschaltet. Von der Schaltwerksteuerung 22 erhält die Steuerlogik 30 noch das Signal SWO, das die Nullstellung des Schaltwerkes 21 signalisiert.

Wird anstelle des Schaltwerkes 21 ein in Fig. 1 nicht dargestellter Stromrichter verwendet, so wird die ebenfalls nicht dargestellte Stromrichterregelung von dem Zugkraftregler 24 angesteuert.

Bei der erfindungsgemässen automatischen Fahr-Bremssteuerung sind die Beschleunigungsregler 25 für «Fahren» und die Beschleunigungsregler 32 und 43 für «Bremsen», die hier die Verzögerung regeln, für das elektrische Bremsen des Triebfahrzeuges und für das pneumatische Bremsen des Zuges, getrennt ausgeführt, um das dynamische Verhalten der einzelnen Kreise getrennt optimal abstimmen zu können. Die Steuerlogik 30 übernimmt dabei die zeitliche parallele Ansteuerung der Beschleunigungsregler 32 und 43.

Stehen weitere, in Fig. 1 nicht dargestellte Bremssysteme zur Verfügung, so erhalten diese eigene Beschleunigungsregler, so dass auch diese Regelkreise optimal abgestimmt werden können. Auch in diesem Fall kann eine Ansteuerung über die Steuerlogik 30 zeitlich parallel erfolgen.

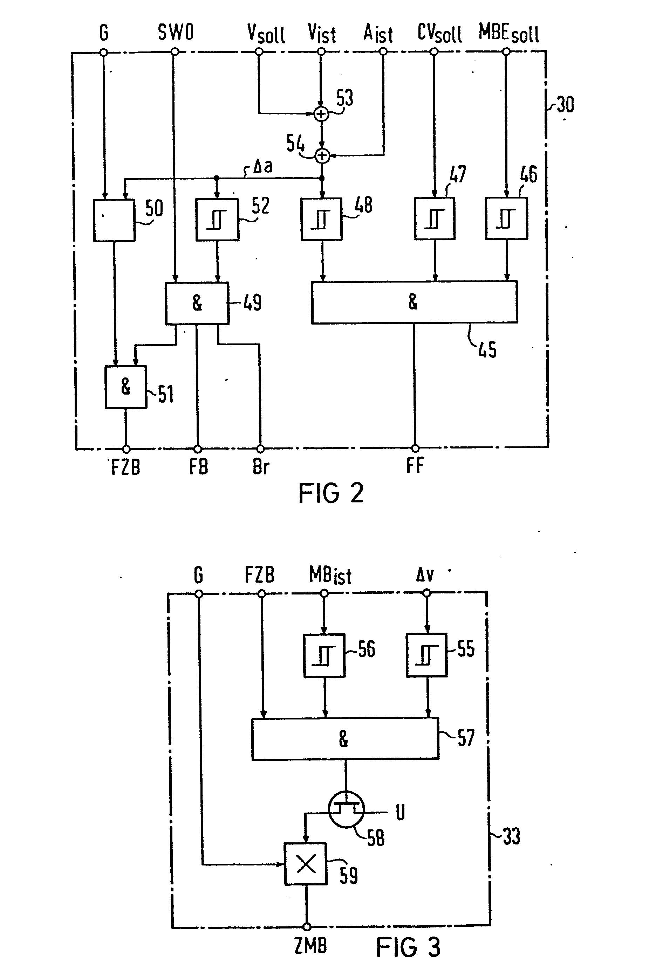

In vorteilhafter Weise ist die Steuerlogik 30, wie in Fig. 2 gezeigt, aus elektronischen Bauteilen aufgebaut. Das Freigabesignal FF für den Fahrbetrieb, das dem Geschwindigkeitsregler 27 (Fig. 1) zugeführt wird, wird in einer Und-Gatter-Anordnung 45 gebildet, deren Eingänge von Grenzwertmeldern 46, 47 und 48 gespeist werden. Unterschreiten die an die Eingänge der Grenzwertmelder 46 und 47 gegebenen Sollwerte $CV_{soll}$ bzw. $MBE_{soll}$ einen vorgegebenen Wert und überschreitet das Eingangssignal $\Delta a$ für den Grenzwertmelder 48, welches aus den Eingangssignalen $V_{soll}$, $V_{ist}$ und $A_{ist}$ gewonnen wird, einen vorgegebenen Wert, so sind die Bedingungen für das Undgatter 45 erfüllt und der Fahrbetrieb wird durch das Signal FF freigegeben. Das Signal $\Delta a$ kann positiv oder negativ sein, je nachdem of «Fahr-» oder «Brems-Betrieb» vorliegt. Die Steuerlogik 30 enthält ferner eine Und-Gatter-Anordnung 49, deren erster Ausgang das Signal Br ausgibt. Ein zweiter Ausgang liefert das Freigabesignal FB für den Bremsbetrieb und ein dritter Ausgang wird über ein weiteres Und-Gatter 51 mit einer Rechenschaltung 50 verknüpft. Der Ausgang dieses Und-Gatters 51 liefert das Freigabesignal FZB für die Zugbremse. Die Eingänge der Und-Gatter-Anordnung 49 erhalten ein Signal SWO von der Schaltwerksteuerung 22, welches die Nullstellung des Schaltwerkes 22 signalisiert und ein Signal des Grenzwertmelders 52, der dann anspricht, wenn der Signalwert $\Delta a$ einen einstellbaren vorgegebenen Wert in Richtung «Bremsen» überschreitet. Der Wert $\Delta a$ wird aus den Werten $V_{soll}$, $V_{ist}$ und $A_{ist}$ durch vorzeichenrichtige Addition in den Summiergliedern 53 und 54 gewonnen. Abhängig von den Signalwerten G für die Fahrzeugmasse und der Beschleunigungsdifferenz $\Delta a$ wird in der Rechenschaltung 50 ein Freigabesignal für das Und-Gatter 51 gebildet.

Die Einrichtung 33 zur Konstantwertzuschaltung ist in Fig. 3 näher dargestellt. Über Grenzwertmelder 55 und 56 werden die Signale $\Delta v$ und $MB_{ist}$ einer Und-Gatter-Anordnung 57 zugeführt. Ein weiterer Eingang der Und-Gatter-Anordnung 57 erhält von der Steuerlogik 30 das Freigabesignal FZB für die Zugbremse. Der Ausgang der Und-Gatter-Anordnung 57 steuert einen elektronischen Schalter 58, der in vorteilhafter Weise als Feldeffekttransistor ausgebildet ist, der eine einstellbare Spannung U einem ersten Eingang eines Multiplikators 59 zuführt, dessen zweiter Eingang vom Einsteller 34 ein der Fahrzeugmasse entsprechendes Signal erhält. Das im Multiplikator 59 gewonnene Ausgangssignal ZMB wird als Konstantwert dem Bremsmomentenregler 31 (Fig. 1) zugeführt. Der Konstantwert ZMB ändert sich in seiner Grösse nur abhängig von der Fahrzeugmasse G, die hier durch die gesamte Zugmasse gebildet wird. Die Zuschaltung des Konstantwertes ZMB über den elektronischen Schalter 58 und die Und-Gatter-Anordnung 57 erfolgt zweckmässigerweise nur, wenn der Wert $\Delta v$ einen einstellbaren Wert überschritten hat und der Wert $MB_{ist}$ einen einstellbaren Wert noch nicht erreicht hat und das Freigabesignal FZB von der Steuerlogik 30 (Fig. 1) ansteht.

1 Fahrmotor
2 Transformator
3 Stromabnehmer
4 Fahrdraht
5 Fahr-Brems-Schalter
6 Erregerwicklung
7 Bremswiderstand
8 Bremserregerstromrichter
9 Antriebsrad
9.1 bis 9.n Rad
10 Tachomaschine
11 Hauptluftleitung
12 Steuerventil
12.1 bis 12.n Steuerventil
13 Doppelrückschlagventil
14 Druckübersetzer
15 Bremszylinder
15.1 bis 15.n Bremszylinder
16 Bremsklotz
16.1 bis 16.n Bremsklotz
17 Regelmagnetventil
18 Regelmagnetventil
19 Relaisventil
20 Kupplung
21 Schaltwerk
22 Schaltwerksteuerung
23 Fahrschalter
24 Zugkraftregler
25 Beschleunigungsregler
26.1 Stromwandler
26.2 Stromwandler
27 Geschwindigkeitsregler
28 Differenzierglied
29 Sollgeschwindigkeitsgeber
30 Steuerlogik
31 Bremsmomentenregler
32 Beschleunigungsregler
33 Konstantwertzuschalteinrichtung
34 Einsteller für die Zugmasse
35 Differenzbildner
36 Bremsregler
37 Verstärker
38 Geschwindigkeitsregler
39 Führerbremsventil
40 Handhebel
41 Verstärker
42 Bremskraftregler
43 Beschleunigungsregler
44 Druck-Spannungs-Umsetzer
45 Und-Gatter-Anordnung
46 Grenzwertmelder

47 Grenzwertmelder
48 Grenzwertmelder
49 Und-Gatter-Anordnung
50 Rechenschaltung
51 Und-Gatter
52 Grenzwertmelder
53 Summierglied
54 Summierglied
55 Grenzmelder
56 Grenzmelder
57 Und-Gatter-Anordnung
58 elektronischer Schalter
59 Multiplikator

| | |
|---|---|
| $Z_{soll}$ | Sollwert |
| Ja | Istwert |
| $A_{soll}$ | Beschleunigungssollwert |
| $-A_{soll}$ | Verzögerungssollwert |
| $\pm A_{ist}$ | Beschleunigungs- bzw. Verzögerungs-Istwert |
| $V_{ist}$ | Istgeschwindigkeit |
| $V_{soll}$ | Geschwindigkeits-Sollwert |
| $MBE_{soll}$ | Bremsmomentensollwert |
| ast | Steuerleitung |
| ZMB | Zusatzsollwert |
| Je | Istwert |
| $MB_{ist}$ | Bremsmomentenistwert |
| $\Delta v$ | Signal |
| G | Fahrzeugmasse |
| CV | Leitung |
| $CV_{soll}$ | Sollwert für die Druckluftbremse |
| $CV_{ist}$ | Istwert für die Druckluftbremse |
| FF | Freigabesignal für Fahrbetrieb |
| $\Delta a$ | Eingangssignal |
| BR | Signal |
| FB | Freigabesignal für Bremsbetrieb |
| FZB | Freigabesignal für Zugbremse |
| SWO | Signal der Schaltwerksteuerung |
| U | Spannung |

**Patentansprüche**

1. Automatische Fahr-Bremssteuerung für spurgebundene Fahrzeuge mit von einem Bremsmomentenregler (31) angesteuerter elektrischer Bremse und druckmittelgesteuerter Bremse, bei der für das elektrische Fahren und druckmittelgesteuerte Bremsen getrennte Geschwindigkeitsregeleinrichtungen vorgesehen sind, die über eine Steuerlogik (30) miteinander verknüpft sind, dadurch gekennzeichnet, dass das Stellglied (2; 21) für den Fahrbetrieb, das Stellglied (8) für die elektrische Bremse und das Stellglied (18) für die pneumatische oder hydraulische Bremse sowie gegebenenfalls Stellglieder für weitere Bremssysteme, insbesondere Wirbelstrombremse, jeweils getrennte Beschleunigungsregler (25; 32; 43) besitzen, wobei der Beschleunigungsregler (25) für den Fahrbetrieb dem Geschwindigkeitsregler (27) für den Fahrbetrieb und die Beschleunigungsregler (32; 43) für den Bremsbetrieb dem Geschwindigkeitsregler (38) für den Bremsbetrieb unterlagert sind und dass die Steuerlogik (30) für eine zeitlich parallele Ansteuerung der Beschleunigungsregler (32; 43) für den Bremsbetrieb ausgelegt ist.

2. Automatische Fahr-Bremssteuerung nach Anspruch 1, dadurch gekennzeichnet, dass bei der zeitlich parallelen Ansteuerung der Beschleunigungsregler (32; 43) für den Bremsbetrieb zu der im Beschleunigungsregler (32) gebildeten Eingangsgrösse ($MBE_{soll}$) des Bremsmomentenreglers (31) der elektrischen Bremse ein Konstantwert (ZMB) über eine Einrichtung (33) addiert wird.

3. Automatische Fahr-Bremssteuerung nach Anspruch 2, dadurch gekennzeichnet, dass der Konstantwert (ZMB), welcher zu der Eingangsgrösse ($MBE_{soll}$) des Momentenreglers (31) addiert wird, in Abhängigkeit vom Bremsmomenten-Istwert ($MB_{ist}$) der elektrischen Bremse ausgeschaltet ist.

4. Automatische Fahr-Bremssteuerung nach Anspruch 3, dadurch gekennzeichnet, dass der Konstantwert (ZMB) in Abhängigkeit von der Geschwindigkeitsregelabweichung ($\Delta v$) aufgeschaltet wird.

5. Automatische Fahr-Bremssteuerung nach Anspruch 4, dadurch gekennzeichnet, dass der Konstantwert (ZMB) in Abhängigkeit von der Fahrzeugmasse (G) aufgeschaltet wird.

**Claims**

1. An automatic drive-brake control system for track-bound vehicles having an electric brake controlled by a brake torque regulator (31) and a brake controlled by a pressure medium, wherein separate speed-regulating devices mutually linked by a control logic (30) are arranged for the electric driving operation and braking operation which is controlled by a pressure medium, characterised in that the setting element (2; 21) for the driving operation, the setting element (8) for the electric brake, the setting element (18) for the pneumatic or hydraulic brake, and possibly setting elements for further brake systems, in particular eddy-current brakes, respectively possess separate acceleration regulators (25; 32; 43), where the acceleration regulator (25) for the driving operation is subordinate to the speed regulator (27) for the driving operation, and the acceleration regulator (32; 43) for the braking operation is subordinate to the speed regulator (38) for the braking operation, and that the control logic (30) is designed for a parallel control of the acceleration regulators (32; 43) for the braking operation in terms of time.

2. An automatic drive-brake control system as claimed in Claim 1, characterised in that during the parallel control of the acceleration regulator (32; 43) for the braking operation in terms of time, there is added to the input value ($MBE_{soll}$) formed in the acceleration regulator (32) of the brake torque regulator (31) of the electric brake, a constant value (ZMB) via a device (33).

3. An automatic drive-brake control system as claimed in Claim 2, characterised in that the constant value (ZMB) added to the input value ($MBE_{soll}$) of the torque regulator (31) is modulated in dependence upon the actual value ($MB_{ist}$) of the torque moment of the electric brake.

4. An automatic drive-brake control system as claimed in Claim 3, characterised in that the constant value (ZMB) is modulated in dependence upon the speed deviation ($\Delta v$).

5. An automatic drive-brake control system as claimed in Claim 4, characterised in that the constant value (ZMB) is modulated in dependence upon the vehicle size (G).

**Revendications**

1. Système de commande automatique de traction-freinage pour des véhicules guidés, comportant un frein électrique commandé par un régulateur (31) du couple de freinage, et un frein commandé par un fluide comprimé, et dans lequel il est prévu des dispositifs de réglage de la vitesse qui sont séparés pour la traction électrique et pour le freinage commandé à l'aide d'un fluide comprimé et qui sont réunis entre eux par l'intermédiaire d'une logique de commande (30), caractérisé par le fait que l'organe de réglage (2; 21) pour la marche, l'organe de réglage (8) pour le frein électrique, et l'organe de réglage (18) pour le frein pneumatique ou hydraulique ainsi que, éventuellement des organes de réglage pour d'autres systèmes de freinage, notamment des freins à courant de Foucault, possèdent des régulateurs d'accélération (25; 32; 43) respectivement séparés, le régulateur d'accélération (25) pour la marche étant subordonné au régulateur de vitesse (27) pour la marche et le régulateur d'accélération (32;

43) pour le freinage étant subordonné au régulateur de vitesse (38) pour le freinage, et que la logique de commande (30) est conçue pour une commande, parallèle dans le temps, des régulateurs d'accélération (32; 43) pour le freinage.

2. Système de commande automatique de traction-freinage suivant la revendication 1, caractérisé par le fait que dans le cas de la commande, parallèle dans le temps, des régulateurs d'accélération (32; 43) pour le freinage, une valeur constante (ZMB) est ajoutée, par l'intermédiaire d'un dispositif (33), à la grandeur d'entrée ($MBE_{soll}$), formée dans le régulateur d'accélération (32), du régulateur (31) du couple de freinage du frein électrique.

3. Système de commande automatique de traction-freinage suivant la revendication 2, caractérisé par le fait que la valeur constante (ZMB), qui est ajoutée à la grandeur d'entrée ($MBE_{soll}$) du régulateur de couple (31), est appliquée en fonction de la valeur réelle ($MB_{ist}$) du couple de freinage du frein électrique.

4. Système de commande automatique de traction-freinage suivant la revendication 3, caractérisé par le fait que la valeur constante (ZM) est appliquée en fonction de l'écart ($\Delta v$) de réglage de la vitesse.

5. Système de commande automatique de traction-freinage suivant la revendication 4, caractérisé par le fait que la valeur constante (ZMB) est appliquée en fonction de la masse (G) du véhicule.

FIG 1

0 037 564

FIG 2

FIG 3